Europäisches Patentamt

(19) European Patent Office

Office européen des brevets

(11) Veröffentlichungsnummer : **0 051 766**
**B1**

(12) **EUROPÄISCHE PATENTSCHRIFT**

(45) Veröffentlichungstag der Patentschrift :
**30.01.85**

(21) Anmeldenummer : **81108639.6**

(22) Anmeldetag : **21.10.81**

(51) Int. Cl.⁴ : **G 08 B 13/00, F 16 M 11/04**

(54) Haltevorrichtung für elektrische Geräte, insbesondere für Einbruchdetektoren.

(30) Priorität : **07.11.80 DEU 8029809**

(43) Veröffentlichungstag der Anmeldung :
**19.05.82 Patentblatt 82/20**

(45) Bekanntmachung des Hinweises auf die Patenterteilung : **30.01.85 Patentblatt 85/05**

(84) Benannte Vertragsstaaten :
**AT BE CH DE FR GB IT LI NL SE**

(56) Entgegenhaltungen :
**DE-A- 2 432 079**
**DE-A- 2 720 344**
**FR-A- 946 115**
**US-A- 2 459 676**

(73) Patentinhaber : **Siemens Aktiengesellschaft**
**Berlin und München Wittelsbacherplatz 2**
**D-8000 München 2 (DE)**

(72) Erfinder : **Storm, Franz**
**Nr. 54**
**A-6213 Pertisau (AT)**
Erfinder : **Thieme, Karl-Heinz**
**Hochkönigstrasse 60**
**D-8000 München 80 (DE)**

EP 0 051 766 B1

Jouve, 18, rue St-Denis, 75001 Paris, France

## Beschreibung

Die Erfindung betrifft eine Haltevorrichtung für elektrische Geräte, insbesondere für Einbruchdetektoren, wobei zwei arretierbare Arme mit einem Scharnier verbunden sind und diese Haltearme jeweils eine Befestigungsvorrichtung aufweisen.

Elektrische Geräte, die bestimmte Blickwinkel ausleuchten oder erfassen sollen, und an einer Wand oder eine Decke eines Gebäudes befestigt sind, müssen schwenkbar gelagert sein. Werden beispielsweise für den Intrusionsschutz Einbruchdetektoren z. B. Infrarotbewegungsmelder, verwendet, so müssen diese an geeigneter Stelle montiert und von ihrem Standort aus auf jeden gewünschten Punkt des Raumes ausgerichtet werden können.

Ist beispielsweise ein komplettes kleines Einbruchmeldegerät, das autark arbeitet, im Wohnbereich anzubringen, so benötigt man dafür eine geeignete Haltevorrichtung, wenn das Gerät nicht im Regal oder ähnlichem aufgestellt werden soll.

Häufig werden für solche Zwecke u. a. Kugelgelenke verwendet, die allseitig schwenkbar und arretierbar sind. Kugelgelenke besitzen aber im allgemeinen einen komplizierteren Aufbau und sind in der Herstellung teuer.

Der Erfindung liegt die Aufgabe zugrunde, eine einfache Haltevorrichtung zu schaffen, die sich kostengünstig fertigen läßt und ein Ausrichten des daran befestigten Gerätes in jede beliebige Richtung ermöglicht. Dabei soll nach dem Ausrichten das Gerät in seiner Position fixiert werden können.

Diese Aufgabe wird nach der Erfindung dadurch gelöst, daß jeder Haltearm ein flaches Armstück und an seinem freien Ende als Befestigungsvorrichtung jeweils einen daran angeformten Klemmring mit einer kreisförmigen Öffnung aufweist, wobei der erste Haltearm geradlinig gestreckt und der zweite Haltearm im rechten Winkel abgewinkelt ist, und daß in der Öffnung des Klemmrings des zweiten Haltearms ein um die Klemmringachse drehbarer Haltefuß festgeklemmt ist.

Die Haltevorrichtung besteht aus drei Teilen, die z. B. aus Kunststoff in einfacher Weise hergestellt werden können : einem Haltefuß, einem im rechten Winkel abgewinkelten Haltearm und einem geradlinig gestreckten Haltearm. Der rechtwinkelig abgebogene Haltearm ist mit seinem Klemmring im Haltefuß drehbar gelagert. Er kann um die Klemmringachse gedreht und in jeder beliebigen Position arretiert werden. Über das Scharnier, das beispielsweise eine arretierbare Schraube aufweisen kann, ist der flachgestreckte Haltearm um die Scharnierachse schwenkbar und kann ebenfalls in einer beliebigen Position fixiert werden. Im Klemmring dieses Haltearms kann ein Detektor oder ein ähnliches Gerät um die Klemmringachse drehbar gelagert und arretiert werden. Zu diesem Zweck kann ein Detektor, z. B. ein Infrarotbewegungsmelder, am Gehäuse einen angeformten, zylinderförmigen Gerätefuß aufweisen, dessen Durchmesser dem Innendurchmesser des Klemmrings entspricht.

Auf diese Weise ermöglicht die Haltevorrichtung einem daran angebrachten Detektor drei Freiheitsgrade, so daß der Detektor in jede beliebige Lage gebracht und dort arretiert werden kann. Eine solche Haltevorrichtung erlaubt einen Einbruchdetektor an beliebiger, aber günstiger Stelle an der Wand oder Decke in einem Gebäude anzubringen und in die gewünschte Position auszurichten.

In vorteilhaften Weise weist der Klemmring einen Öffnungsschlitz auf, der zum Ringquerschnitt parallel angeordnet ist. Senkrecht zu diesem Öffnungsschlitz kann eine Klemmschraube vorgesehen sein, mit der der Klemmring auf dem Haltefuß oder auf dem Gerätefuß festgeklemmt werden kann.

In einer weiteren Ausgestaltung der Erfindung kann der Klemmring geschlossen sein. Um ihn auf dem Halte- bzw. Gerätefuß arretieren zu können, kann eine Klemmschraube vorgesehen sein, die im Klemmring senkrecht zur Klemmringachse angeordnet ist.

Für eine Anbringung eines Detektors auf einer Fläche, z. B. der Wand oder Decke eines Gebäudes, ist es zweckmäßig, den Haltefuß so zu gestalten, daß er an der Wand anmontiert, z. B. angeschraubt werden kann. Zweckmäßigerweise kann der Haltefuß als kreisförmige Grundplatte mit einem darauf zentrisch angeformten Zylinder ausgebildet sein. Dabei entspricht der Durchmesser des Zylinders des Haltefußes dem Innendurchmesser des Klemmrings des Haltearms.

Zur Befestigung des Haltefußes an der Wand weist der Haltefuß in der Grundplatte beispielsweise zwei diametral gegenüberliegende Bohrungen auf. Entspricht der Durchmesser der Grundplatte des Haltefußes annähernd dem Außendurchmesser des Klemmrings, so ist diese Grundplatte mit dem Klemmring des Haltearms abgedeckt. Soll ein Infrarotdetektor, der möglicherweise als komplettes, autarkes Einbruchmeldegerät ausgebildet ist, auf einer Fläche frei aufgestellt werden, so kann die Grundplatte des Haltefußes einen entsprechend größeren Durchmesser aufweisen. Beispielsweise kann die Größe der Grundplatte der Größe des Haltearms mit Klemmring entsprechen. Eine derartig ausgebildete Haltevorrichtung kann als Tischstativ ein freies Aufstellen eines Einbruchmeldegerätes ermöglichen.

Weitere Einzelheiten der Erfindung werden anhand der Zeichnungen an einem Ausführungsbeispiel erläutert.

Es zeichen

Figuren 1 bis 3 eine Haltevorrichtung mit großem Haltefuß in verschiedenen Ansichten,

Figur 4 einen Haltefuß mit kleinem Durchmesser der Grundplatte in Seitenansicht,

Figur 5 einen Haltefuß mit kleiner Grundplatte in Draufsicht,

Figur 6 die Haltevorrichtung in perspektivischer Darstellung und die

Figuren 7 bis 12 die Haltevorrichtung mit einem Detektor in verschiedener Lage und Neigung.

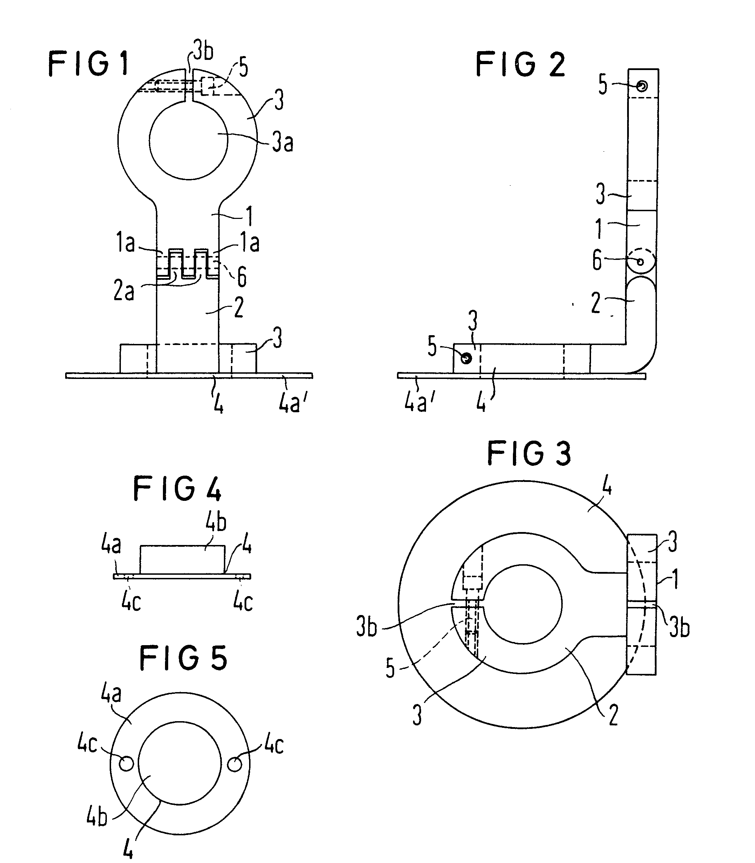

In Fig. 1 ist eine Haltevorrichtung in Frontansicht dargestellt. Der rechtwinkelig abgebogene Haltearm 2 ist mit seinem Klemmring 3 auf den Haltefuß 4 aufgesetzt. Der Haltefuß 4 weist eine Grundplatte 4a' mit großem Durchmesser auf. Dadurch kann die Haltevorrichtung wie ein Tischstativ aufgestellt werden. Der Haltearm 2 hat im abgewinkelten Bereich angeformte Finger 2a, die in entsprechend ausgebildete Finger 1a des Haltearms 1 greifen und mit einer Schraube 6 miteinander verbunden sind. Um die Achse der Schraube 6 ist der Haltearm 1 schwenkbar.

Das dadurch gebildete Scharnier kann durch Anziehen der Schraube 6 arretiert werden. Der Klemmring 3 ist am freien Ende des Haltearms 1 angeformt und weist gegenüber dem flachen Haltearmstück einen Öffnungsschlitz 3b auf. Senkrecht zu dem Öffnungsschlitz 3b ist im Klemmring 3 eine Klemmschraube 5 angeordnet. In der Öffnung 3a des Klemmrings 3 kann ein Gerät mit seinem Gerätefuß mittels der Klemmschraube 5 eingespannt werden.

In Fig. 2 ist der Haltearm in Seitenansicht dargestellt. Hier ist der Klemmring 3 des abgewinkelten Haltearms auf den Haltefuß 4 gesetzt und mit der Klemmschraube 5 festgeklemmt. Die Fig. 3 zeigt die Haltevorrichtung noch in Draufsicht.

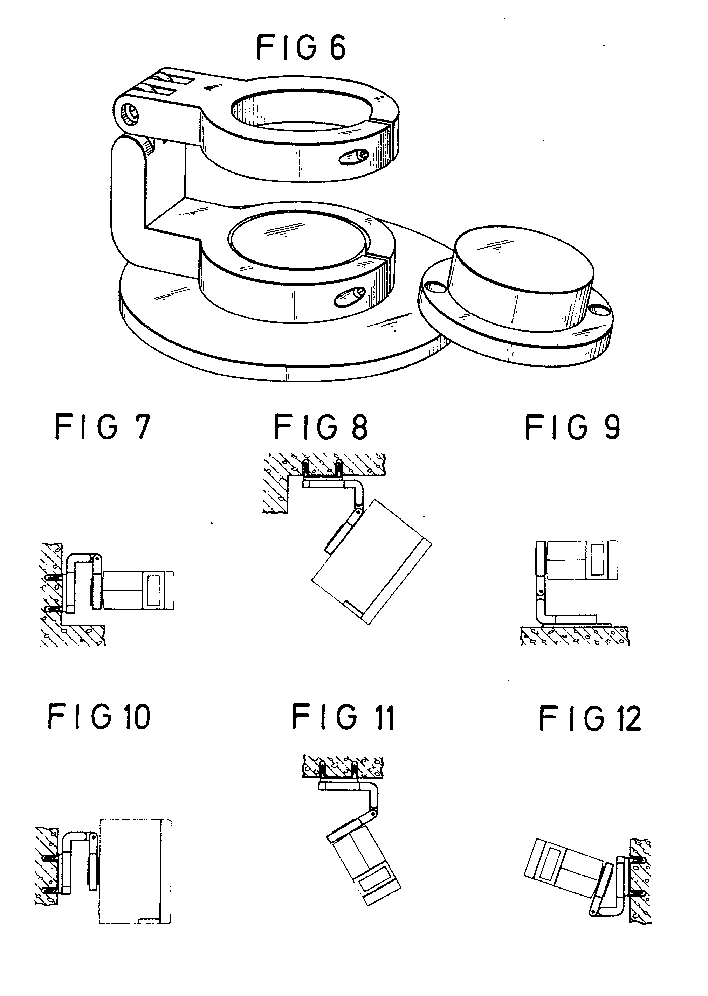

Die Fig. 4 und 5 zeigen den Haltefuß 4 mit der Grundplatte 4a und dem angeformten Zylinder 4b. Die Grundplatte 4a besitzt einen kleinen Durchmesser. Die Bohrungen 4c dienen zur Befestigung des Haltefußes 4, und damit der Haltevorrichtung, an einer Wand. Die kleine Grundplatte 4a kann beispielsweise mit Schrauben an der Wand befestigt werden.

In Fig. 6 ist die Haltevorrichtung perspektivisch dargestellt. Die Fig. 7 bis 12 veranschaulichen die verschiedenen Möglichkeiten, einen Detektor oder ein Einbruchmeldegerät zu montieren und auszurichten. Dabei sind die unterschiedlichen Lagen und Neigungen eines Einbruchmeldegerätes gezeigt.

**Ansprüche**

1. Haltevorrichtung für elektrische Geräte, insbesondere für Einbruchdetektoren, wobei zwei Arme mit einem arretierbaren Scharnier verbunden sind und diese Haltearme (1, 2) jeweils eine Befestigungsvorrichtung aufweisen, dadurch gekennzeichnet, daß jeder Haltearm (1, 2) ein flaches Armstück und an seinen freien E. den als Befestigungsvorrichtung jeweils einen daran angeformten Klemmring (3) mit einer kreisförmigen Öffnung (3a) aufweist, wobei der erste Haltearm (1) geradlinig gestreckt und der zweite Haltearm (2) im rechten Winkel abgewinkelt ist, und daß in der Öffnung (3a) des Klemmrings (3) des zweiten Haltearms (2) ein um die Klemmringachse drehbarer Haltefuß (4) festgeklemmt ist.

2. Haltevorrichtung nach Anspruch 1, dadurch gekennzeichnet, daß der Klemmring (3) einen zum Ringquerschnitt parallelen Öffnungsschlitz (3b) mit einer senkrecht dazu angeordneten Klemmschraube (5) aufweist.

3. Haltevorrichtung nach Anspruch 1, dadurch gekennzeichnet, daß der Klemmring (3) eine senkrecht zur Klemmringachse angeordnete Klemmschraube aufweist.

4. Haltevorrichtung nach Anspruch 1, dadurch gekennzeichnet, daß der Haltefuß (4) aus einer kreisförmigen Grundplatte (4a) mit einem darauf zentrisch angeformten Zylinder (4b) gebildet ist.

5. Haltevorrichtung nach Anspruch 4, dadurch gekennzeichnet, daß der Durchmesser der Grundplatte (4a) des Haltefußes (4) annähernd gleich dem Außendurchmesser des Klemmrings (3) ist, wobei die Grundplatte (4a) mit zwei diametral gegenüberliegenden Bohrungen (4c) versehen ist.

6. Haltevorrichtung nach Anspruch 4, dadurch gekennzeichnet, daß der Durchmesser (4a') des Haltefußes (4) annähernd gleich der Größe eines Haltearms (1, 2) mit dem angeformten Klemmring (3) ist.

**Claims**

1. A supporting device for electrical appliances, in particular for burglar detectors, in which two arms are connected to a lockable hinge and these supporting arms (1, 2) in each case have a fixing device, characterised in that each supporting arm (1, 2) has a flat arm portion and at its free end, as a fixing device, a clamping ring (3) which is attached thereto and has a circular opening (3a), the first supporting arm (1) being rectilinearly extended and the second supporting arm (2) being bent at right angles ; and that a supporting foot (4), which is rotatable about the axis of the clamping ring, is clamped in the opening (3a) of the clamping ring (3) of the second supporting arm (2).

2. A supporting device as claimed in Claim 1, characterised in that the clamping ring (3) has an opening slot (3b) which is parallel to the cross-section of the ring and has a clamping screw (5) which is arranged perpendicularly thereto.

3. A supporting device as claimed in Claim 1, characterised in that the clamping ring (3) has a clamping screw which is arranged perpendicularly to the axis of the clamping ring.

4. A supporting device as claimed in Claim 1, characterised in that the supporting foot (4) is formed from a circular base plate (4a) having a cylinder (4b) which is centrally formed thereon.

5. A supporting device as claimed in Claim 4, characterised in that the diameter of the base plate (4a) of the supporting foot (4) is approximately the same as the external diameter of the clamping ring (3), the base plate (4a) being provided with two diametrally opposite bores (4c).

6. A supporting device as claimed in Claim 4, characterised in that the diameter (4a') of the supporting foot (4) is approximately the same as the size of a supporting arm (1, 2) with the attached clamping ring (3).

## Revendications

1. Dispositif de support pour appareils électriques, notamment pour des détecteurs d'effraction, dans lequel deux bras sont reliés par une articulation pouvant être bloquée et ces bras de support (2) comportent chacun un dispositif de fixation, caractérisé par le fait que chaque bras de support (1, 2) comporte une pièce de bras plate et, comme dispositif de fixation, au niveau de chacune de ses extrémités, une bague de serrage (3) qui y est façonnée et comportant une ouverture circulaire (3a), le premier bras de support (1) étant allongé de façon rectiligne et le second bras (2) étant coudé à angle droit, et qu'un pied de support (4) pouvant tourner autour de l'axe de la bague de serrage est fixé par blocage dans l'ouverture (3a) de la bague de serrage (3) du second bras de support (2).

2. Dispositif de maintien suivant la revendication 1, caractérisé par le fait que la bague de serrage (3) possède une fente d'ouverture (3b) parallèle à la section transversale de la bague et possédant une vis de serrage (5) disposée perpendiculairement à cette fente.

3. Dispositif de maintien suivant la revendication 1, caractérisé par le fait que la bague de serrage (3) possède une vis de serrage disposée perpendiculairement à l'axe de l'anneau de serrage.

4. Dispositif de maintien suivant la revendication 1, caractérisé par le fait que le pied de support (4) est formé par une plaque de base circulaire (4a) munie d'un cylindre (4b) réalisé en position centrée par façonnage sur ladite plaque.

5. Dispositif de maintien suivant la revendication 4, caractérisé par le fait que le diamètre de la plaque de base (4a) du pied de support (4) est approximativement égal au diamètre extérieur de la bague de serrage (3), la plaque de base (4a) étant munie de deux perçages (4c) diamétralement opposés.

6. Dispositif de maintien suivant la revendication 4, caractérisé par le fait que le diamètre (4a') du pied de support (4) est approximativement égal à la longueur d'un bras de support (1, 2) muni de la bague de serrage (3) qui y est façonnée.

FIG 1

FIG 2

FIG 4

FIG 3

FIG 5

FIG 6

FIG 7

FIG 8

FIG 9

FIG 10

FIG 11

FIG 12